# EUROPEAN PATENT APPLICATION

(11) **EP 4 181 042 A1**
(43) Date of publication of application: **17.05.2023**
(21) Application number: 21836951.0
(22) Date of filing: 24.06.2021
(51) Int. Cl.: G06Q 10/08, G06K 17/00

(54) **WAREHOUSE SORTING METHOD, APPARATUS AND SYSTEM, AND SERVER, ROBOT AND STORAGE MEDIUM**

(30) Priority: 07.07.2020 CN 202010644847
(71) Applicant: Hai Robotics Co., Ltd., Shenzhen, Guangdong 518000 (CN)
(72) Inventor: SUN, Zongxin, Shenzhen, Guangdong 518000 (CN); ZHOU, Hongxia, Shenzhen, Guangdong 518000 (CN)
(74) Representative: Gulde & Partner
(86) International application number: PCT/CN2021/102162
(87) International publication number: WO 2022/007643

(57) **Abstract**

Embodiments of the present disclosure provide a warehouse sorting method and apparatus, a server, a robot, a system, and a storage medium. The method includes: obtaining a type of a warehouse sorting requirement; determining warehouse sorting task information according to the type of the warehouse sorting requirement, the warehouse sorting task information including information about to-be-sorted goods, information about a sorted-out container in which the goods are currently located, and information about a corresponding target container, to move the goods from the sorted-out container to the target container; and outputting the warehouse sorting task information. Therefore, the user and/or the robot may execute the warehouse sorting task information, to sort stored goods in time, thereby performing management on a warehouse more efficiently and improving a use effect of the warehouse.

## Description

### CROSS-REFERENCE TO RELATED APPLICATIONS

The present disclosure claims priority to Chinese Patent Application No. 202010644847.9, filed with the China National Intellectual Property Administration on July 7, 2020 and entitled "WAREHOUSE SORTING METHOD, APPARATUS, SERVER, ROBOT, SYSTEM, AND STORAGE MEDIUM", which is incorporated herein by reference in its entirety.

### TECHNICAL FIELD

The present disclosure relates to the field of smart warehousing, and in particular, to a warehouse sorting method, apparatus, a server, a robot, a system, and a storage medium.

### BACKGROUND

With the continuous development of social trading and the continuous progress of science and technology, the warehousing technology is also continuously improved, and how to implement warehousing sorting more efficiently becomes a hot issue.

In an existing warehousing system, a large amount of goods containers are generally arranged in a warehouse for storing goods, each goods container may store a plurality of goods, and an inventory structure depends on inbound and outbound. Specifically, during inbound, goods are stored in a goods container in the warehouse, and during outbound, the goods are taken out from the corresponding goods container. In a case without an inbound or outbound order, the inventory structure cannot be adjusted in time. As a result, management on the warehouse cannot be effectively implemented, and a use effect of the warehouse is relatively poor.

### SUMMARY

Embodiments of the present disclosure provide a warehouse sorting method, apparatus, a server, a robot, a system, and a storage medium, to resolve a technical problem that an inventory structure cannot be adjusted in time in the related art.

According to a first aspect, an embodiment of the present disclosure provides a warehouse sorting method, applicable to a server, and including:
obtaining a type of a warehouse sorting requirement;
determining warehouse sorting task information according to the type of the warehouse sorting requirement, the warehouse sorting task information including information about to-be-sorted goods, information about a sorted-out container in which the goods are currently located, and information about a corresponding target container, to move the goods from the sorted-out container to the target container; and
outputting the warehouse sorting task information.

In a possible design, the type of the warehouse sorting requirement includes storage density improvement and/or outbound efficiency improvement.

In a possible design, the outputting the warehouse sorting task information includes:
transmitting the information about the sorted-out container and the information about the target container in the warehouse sorting task information to a robot, to cause the robot to carry the sorted-out container and the target container from a storage region to a preset region according to the warehouse sorting task information; and
displaying the information about the sorted-out container, the information about the target container, and the information about the goods in the warehouse sorting task information to a user, to cause the user to move the goods from the sorted-out container to the target container in the preset region.

In a possible design, the outputting the warehouse sorting task information includes:
transmitting the warehouse sorting task information to a robot, to cause the robot to move the to-be-sorted goods from the corresponding sorted-out container to the target container according to the warehouse sorting task information.

In a possible design, the transmitting the warehouse sorting task information to a robot, to cause the robot to move the to-be-sorted goods from the corresponding sorted-out container to the target container according to the warehouse sorting task information includes:
instructing the robot to carry a sorted-out container loading the to-be-sorted goods to move, to sort the to-be-sorted goods in the sorted-out container to at least one target container; and/or,
instructing the robot to carry a target container to move, to take out the to-be-sorted goods from at least one sorted-out container and sort the to-be-sorted goods to the target container.

In a possible design, the sorted-out container carried by the robot is a goods container that is estimated to be cleared after the warehouse sorting task information is completed.

In a possible design, the method further includes:
instructing, in a case that the sorted-out container is cleared, the robot to carry the sorted-out container to a region configured to place empty containers or use the sorted-out container as a target container for warehouse sorting; and/or instructing, after the to-be-sorted goods are moved from the sorted-out container to a corresponding target container, the robot to carry the target container to a storage region.

In a possible design, the obtaining a type of a warehouse sorting requirement includes:
determining the type of the warehouse sorting requirement according to at least one of a goods inventory state, a goods container state, an inbound requirement, and an outbound requirement of the storage region; or
obtaining the type of the warehouse sorting requirement inputted by the user.

In a possible design, the determining warehouse sorting task information according to the type of the warehouse sorting requirement includes:
generating, in a case that the type of the warehouse sorting requirement is storage density improvement, the warehouse sorting task information according to a storage requirement of goods and/or a current storage state of the goods.

In a possible design, the generating the warehouse sorting task information according to storage requirement of goods and/or current storage state of the goods includes:
obtaining a number of savable goods containers through warehouse sorting according to a total number of goods containers currently occupied by goods stored in the storage region and a total number of goods containers estimated to be occupied by the stored goods after warehouse sorting;
calculating an estimated warehouse sorting time required for warehouse sorting; and
generating, in a case that the number of the savable goods containers and the estimated warehouse sorting time meet a preset condition, the warehouse sorting task information according to the storage requirement of the goods and/or the current storage state of the goods.

In a possible design, the method further includes:
generating warehouse sorting warning information in a case that the number of the savable goods containers and the estimated warehouse sorting time do not meet the preset condition.

In a possible design, the generating the warehouse sorting task information according to storage requirement of goods includes:
obtaining identity information of the goods and/or attribute information of the goods;
determining corresponding storage requirement according to the identity information of the goods and/or attribute information of the goods; and
generating the warehouse sorting task information according to the storage requirement, where
the attribute information of the goods includes at least one of the following: a production data, an original attribute, and information about an owner of the goods; and the storage requirement include at least one of the following: independent storage, mixed storage, and sequential storage.

In a possible design, the generating the warehouse sorting task information according to current storage state of the goods includes:
determining a type of a target container corresponding to the goods according to current storage state of the to-be-sorted goods; and
generating the warehouse sorting task information according to the determined type of the target container.

In a possible design, the determining a type of a target container corresponding to the goods according to current storage state of the to-be-sorted goods includes:
in a case that goods to be placed in a same target container currently only occupy one type of goods containers in the storage region, a goods container of the type is superior to goods containers of other types to be used as the target container of the goods; and/or,
in a case that goods to be placed in a same target container currently occupy a plurality of types of goods containers in the storage region, the type of the target container is selected from the plurality of types of goods containers according to numbers of goods currently stored by each of the plurality of types of goods containers and/or inbound times of the goods.

In a possible design, the generating the warehouse sorting task information according to current storage state of the goods includes:
for the goods to be placed in a same target container, in a case that the target container is selectable from a plurality of selectable goods containers, the target container is determined according to space occupied by the goods and remaining space of each selectable goods container; and
generating the warehouse sorting task information according to the determined target container.

In a possible design, the determining warehouse sorting task information according to the type of the warehouse sorting requirement includes:
generating, in a case that the type of the warehouse sorting requirement is outbound efficiency improvement, the warehouse sorting task information according to historical outbound information of goods and/or planned outbound information of goods.

In a possible design, the generating the warehouse sorting task information according to historical outbound information of goods and/or planned outbound information of goods includes:
generating, in a case that a number of times that first goods and second goods appear in a same outbound order meets a preset times requirement and an outbound number of the first goods and the second goods in the same outbound order meets a preset outbound number requirement, the warehouse sorting task information configured to sort at least a part of the first goods and at least a part of the second goods in the storage region to a same target container.

In a possible design, the generating the warehouse sorting task information according to planned outbound information of goods includes:
generating, in a case that an outbound number corresponding to all goods in an outbound order that is not finished is less than an accommodation capacity of a single goods container, the warehouse sorting task information configured to sort all the goods corresponding to the outbound order to a same target container.

In a possible design, the generating the warehouse sorting task information according to planned outbound information of goods includes:
generating, in a case that an outbound number of first goods in an outbound order that is not finished or a plurality of adjacent outbound orders exceeds an accommodation capacity of a single goods container and the first goods are currently distributed in a plurality of goods containers, the warehouse sorting task information configured to sort the first goods in at least two goods containers among the plurality of goods containers to a same target container; and
the plurality of adjacent outbound orders are a plurality of outbound orders in which a difference between outbound times corresponding to any two outbound orders is less than a preset time difference.

In a possible design, the warehouse sorting task information further includes space recorded information of the target container and/or the sorted-out container, to cause the robot to start an alternative operation in a case of detecting that space actual information of the target container and/or the sorted-out container does not match the space recorded information.

In a possible design, the space recorded information includes at least one of the following: size information of goods in the container, information about space occupied by goods in the container, information about remaining space in the container, and information about available space in the container.

In a possible design, the method further includes:
determining space recorded information of each goods container through machine learning according to a volume of goods, information about goods placed in a container body, space information in a container body, and value changes of an inventory storage situation.

In a possible design, the warehouse sorting task information further includes goods recorded information of the target container and/or the sorted-out container, to cause the robot to start an alternative operation in a case of detecting that goods actual information of the target container and/or the sorted-out container does not match the goods recorded information.

In a possible design, the target container is a goods container randomly selected by the server or the user.

In a possible design, the randomly selected goods container is an empty container or a goods container in which goods are placed.

In a possible design, the method further includes: determining other information required for the warehouse sorting task information according to the randomly selected goods container, to construct the warehouse sorting task information.

According to a second aspect, an embodiment of the present disclosure further provides a warehouse sorting method, applicable to a robot, the method including:
obtaining warehouse sorting task information determined by a server according to a type of a warehouse sorting requirement, the warehouse sorting task information including information about to-be-sorted goods, information about a sorted-out container in which the goods are currently located, and information about a corresponding target container; and
moving the to-be-sorted goods from the sorted-out container to the corresponding target container according to the warehouse sorting task information.

In a possible design, the type of the warehouse sorting requirement includes storage density improvement and/or outbound efficiency improvement.

In a possible implementation, the moving the to-be-sorted goods from the sorted-out container to the corresponding target container includes:
carrying a sorted-out container loading the to-be-sorted goods to move, to sort the to-be-sorted goods in the sorted-out container to at least one target container; and/or,
carrying a target container to move, to take out the to-be-sorted goods from at least one sorted-out container and sort the to-be-sorted goods to the target container.

In a possible design, the carried sorted-out container is a goods container that is estimated to be cleared after the warehouse sorting task information is completed.

In a possible design, the method further includes:
in a case that the sorted-out container is cleared, carrying the sorted-out container to a region configured to place empty containers or using the sorted-out container as a target container for warehouse sorting; and/or after the to-be-sorted goods are moved from the sorted-out container to a corresponding target container, carrying the target container to a storage region.

In a possible design, the warehouse sorting task information further includes space recorded information of the target container and/or the sorted-out container, and the method further includes:
starting an alternative operation in a case of detecting that space actual information of the target container and/or the sorted-out container does not match the space recorded information.

In a possible design, the space recorded information includes at least one of the following: size information of goods in the container, information about space occupied by goods in the container, information about remaining space in the container, andinformation about available space in the container.

In a possible design, the method further includes:
photographing internal space of the target container and/or the sorted-out container through a visual sensor, and determining the space actual information by analyzing a photographed image.

In a possible design, the determining the space actual information by analyzing a photographed image includes:
determining the space actual information according to multi-dimensional information and/or depth information corresponding to the photographed image.

In a possible design, the method further includes:
perceiving internal space of the target container and/or the sorted-out container through a distance sensor, and determining the space actual information by analyzing a perception result.

In a possible design, the distance sensor includes at least one of the following: an infrared sensor, a laser sensor, and a sound wave sensor.

In a possible design, the starting an alternative operation includes at least one of the following:
reporting mismatching information to the server, adjusting positions of goods in the target container through a mechanical arm, and issuing alarm information.

In a possible design, the warehouse sorting task information further includes goods recorded information of the target container and/or the sorted-out container, and the method further includes:
starting an alternative operation in a case of detecting that goods actual information of the target container and/or the sorted-out container does not match the goods recorded information.

In a possible design, the method further includes:
determining the goods actual information of the target container and/or the sorted-out container according to at least one of a one-dimensional code, a two-dimensional code, and a radio frequency tag.

According to a third aspect, an embodiment of the present disclosure further provides a warehouse sorting apparatus, applicable to a server, the apparatus including:
an obtaining module, configured to obtain a type of a warehouse sorting requirement;
a determining module, configured to determine warehouse sorting task information according to the type of the warehouse sorting requirement, the warehouse sorting task information including information about to-be-sorted goods, information about a sorted-out container in which the goods are currently located, and information about a corresponding target container, to move the goods from the sorted-out container to the target container; and
an output module, configured to output the warehouse sorting task information.

According to a fourth aspect, an embodiment of the present disclosure further provides a warehouse sorting apparatus, applicable to a robot, the apparatus including:
an obtaining module, configured to obtain warehouse sorting task information determined by a server according to a type of a warehouse sorting requirement, the warehouse sorting task information including information about to-be-sorted goods, information about a sorted-out container in which the goods are currently located, and information about a corresponding target container; and
a processing module, configured to move the to-be-sorted goods from the sorted-out container to the corresponding target container according to the warehouse sorting task information.

According to a fifth aspect, an embodiment of the present disclosure further provides a server, including
at least one processor, and
a memory communicatively connected to the at least one processor,
the memory stores instructions executable by the at least one processor, the instructions, when executed by the at least one processor, causes the at least one processor to perform the method according to any one of the first aspect.

According to a sixth aspect, an embodiment of the present disclosure further provides a robot, including:
at least one processor, and
a memory communicatively connected to the at least one processor,
the memory stores instructions executable by the at least one processor, the instructions, when executed by the at least one processor, causes the robot to perform the method according to any one of the second aspect.

According to a seventh aspect, an embodiment of the present disclosure further provides a warehouse sorting system, including the server according to the fifth aspect and the robot according to the sixth aspect.

According to an eighth aspect, an embodiment of the present disclosure further provides a computer-readable storage medium storing computer-executable instructions, the computer-executable instructions, when executed by a processor, are configured to implement the method according to any one of the first aspect or any one of the second aspect.

According to a ninth aspect, an embodiment of the present disclosure provides a computer program product including a computer program, the computer program, when executed, is configured to implement the method according to any one of the first aspect or any one of the second aspect.

According to the warehouse sorting method and apparatus, the server, the robot, the system, and the storage medium provided in the embodiments of the present disclosure, a type of a warehouse sorting requirement may be obtained; warehouse sorting task information is determined according to the type of the warehouse sorting requirement, the warehouse sorting task information including information about to-be-sorted goods, information about a sorted-out container in which the goods are currently located, and information about a corresponding target container, to move the goods from the sorted-out container to the target container; and the warehouse sorting task information is outputted. Therefore, the user and/or the robot may execute the warehouse sorting task information and construct the warehouse sorting task information according to the type of the warehouse sorting requirement to guide warehouse sorting, to sort stored goods in time, thereby performing management on a warehouse more efficiently and improving a use effect of the warehouse.

### BRIEF DESCRIPTION OF THE DRAWINGS

To describe the technical solutions in the embodiments of the present disclosure or in the related art more clearly, the following briefly introduces the accompanying drawings required for describing the embodiments or the related art. Apparently, the accompanying drawings in the following description show some embodiments of the present disclosure, and a person of ordinary skill in the art may still derive other accompanying drawings from these accompanying drawings without creative efforts.
FIG. 1 is a schematic diagram of an application scenario according to an embodiment of the present disclosure;
FIG. 2 is a schematic flowchart of a warehouse sorting method according to an embodiment of the present disclosure;
FIG. 3 is a schematic diagram of a principle of sorting goods according to an embodiment of the present disclosure;
FIG. 4 is a schematic flowchart of another warehouse sorting method according to an embodiment of the present disclosure;
FIG. 5 is a schematic diagram of a warehouse sorting effect of storage density improvement according to an embodiment of the present disclosure;
FIG. 6 is a schematic flowchart of another warehouse sorting method according to an embodiment of the present disclosure;
FIG. 7 is a schematic diagram of a warehouse sorting effect of outbound efficiency improvement according to an embodiment of the present disclosure;
FIG. 8 is a schematic flowchart of another warehouse sorting method according to an embodiment of the present disclosure;
FIG. 9 is a schematic structural diagram of a warehouse sorting apparatus according to an embodiment of the present disclosure;
FIG. 10 is a schematic structural diagram of another warehouse sorting apparatus according to an embodiment of the present disclosure;
FIG. 11 is a schematic structural diagram of a server according to an embodiment of the present disclosure; and
FIG. 12 is a schematic structural diagram of a robot according to an embodiment of the present disclosure.

### DETAILED DESCRIPTION

To make the objectives, technical solutions, and advantages of the embodiments of the present disclosure clearer, the technical solutions in the embodiments of the present disclosure will be clearly and completely described with reference to the accompanying drawings in the embodiments of the present disclosure. Apparently, the described embodiments are a part of the embodiments of the present disclosure, but not all the embodiments. All other embodiments obtained by a person of ordinary skill in the art based on the embodiments of the present disclosure without creative efforts shall fall within the protection scope of the present disclosure.

A warehouse sorting system provided in the embodiments of the present disclosure may be applicable to any suitable industry field or technical field such as the smart warehousing field. In the smart warehousing field, after goods are inbound, an inventory is generally outbound through an order or a counting requirement, and inbound is then performed or performed through goods supplement. An inventory structure is generally decided by an inbound order and an outbound order, and as a result, adjustment on the inventory structure is not flexible enough.

A simple example is as follows: when goods A are inbound, the goods A are stored in a first goods container of a warehouse and occupy half of storage space of the first goods container; when goods B are then inbound, the goods B are placed in the first goods container, and the first goods container is completely occupied by the goods A and the goods B; and after a period of time, goods C are inbound, since the first goods container is filled up, the goods C can be only placed in a second goods container and occupy half of the second goods container. Since order requirements of each batch of goods are different, the goods B may be outbound before the goods A and the goods C. After the goods B are outbound, a total volume of the remaining goods A and goods C only occupies accommodating space of one goods container. However, in this case, the goods A and the goods C are still stored in two goods containers, leading to a waste of storage space.

In an actual application, an inventory amount of a warehouse is relatively great, due to massive goods, the inventory structure cannot be adjusted in time, and a result caused by the inventory structure becomes severer. To resolve the problem, an embodiment of the present disclosure provides a warehouse sorting method, and warehouse sorting task information may be determined by a server. The warehouse sorting task information includes necessary information for sorting a warehouse, and the server outputs the warehouse sorting task information, so that a robot and/or a user may execute the warehouse sorting task information, to sort an inventory in time, thereby performing management on the warehouse more efficiently and improving a use effect of the warehouse.

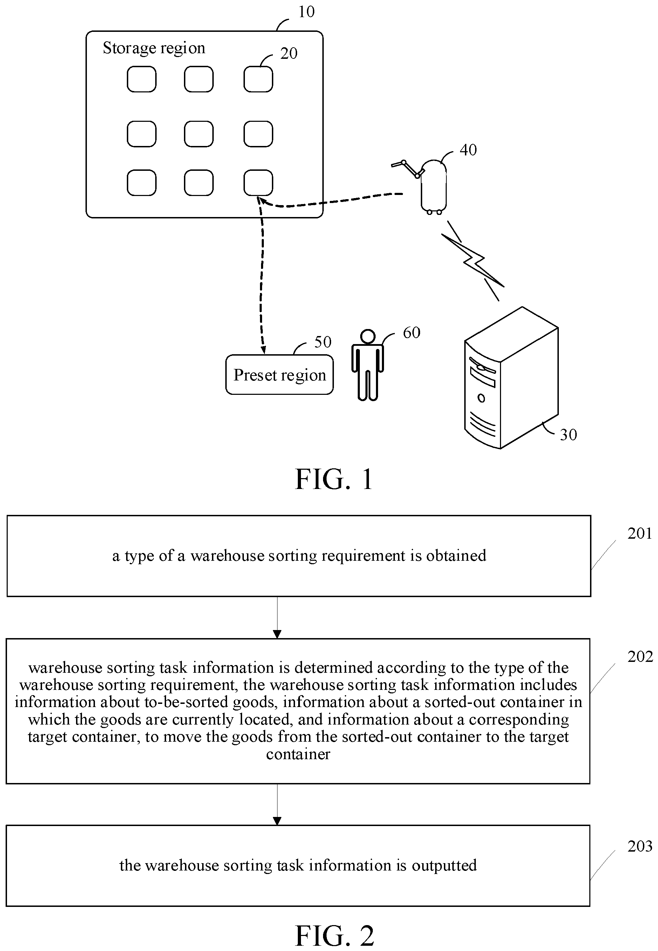

FIG. 1 is a schematic diagram of an application scenario according to an embodiment of the present disclosure. As shown in FIG. 1, a plurality of goods containers 20 may be stored in a storage region 10, and goods may be stored in the goods container 20. The storage region 10 may be a warehouse or any other region that can store goods. A server 30 may communicate with a robot 40. One or more servers 30 and robots 40 may be provided, and specific numbers of the servers and the robots are not limited. The server 30 controls the robot 40 to take out a to-be-sorted goods container 20 from the storage region 10 and carry the goods container to a preset region 50 such as a workstation, and dotted lines in the figure show a movement trajectory when the robot 40 carries out a goods container.

Optionally, the robot 40 may be provided with a walking mechanism, and the walking mechanism is configured to realize movement of the robot 40, so that the robot 40 may move between the storage region 10 and other regions. In addition, the robot 40 may be further provided with forks, so that the robot could store and take out a goods container 20 from a shelving unit of the storage region 10.

After the robot 40 carries the goods container 20 to the preset region 50, a user 60 may sort goods in the goods container 20 in the preset region 50, and the user 60 or the robot 40 may carry the goods container 20 back to the storage region or place the goods container to another region after the goods are sorted.

FIG. 2 is a schematic flowchart of a warehouse sorting method according to an embodiment of the present disclosure. The method in this embodiment may be applicable to a server, such as the server 30 in FIG. 1. As shown in FIG. 2, the warehouse sorting method may include:
In operation 201: a type of a warehouse sorting requirement is obtained.

Optionally, the server may obtain the type of the warehouse sorting requirement in a plurality of manners. For example, the server may automatically determine whether there is a warehouse sorting requirement currently and a type of the warehouse sorting requirement according to an inventory situation, or may obtain the type of the warehouse sorting requirement inputted by a user, or may obtain the type of the warehouse sorting requirement from another device such as a client terminal.

The type of the warehouse sorting requirement may be set according to an actual requirement, which is not limited in this embodiment. For example, the type of the warehouse sorting requirement may include storage density improvement and/or outbound efficiency improvement.

Optionally, the type of the warehouse sorting requirement may be determined according to at least one of a goods inventory state, a goods container state, an inbound requirement, and an outbound requirement of a storage region. The goods inventory state may include a number of goods, a storage position or the like. The goods container state may include a position of a goods container, information about goods stored in the goods container, remaining storage space of the goods container or the like. The inbound requirement may include a goods inbound plan, for example, a batch of goods are about to be inbound in a future time. The outbound requirement may include a goods outbound plan, for example, a batch of goods are about to be outbound in a future time.

A logic correspondence between the foregoing information and the type of the warehouse sorting requirement may be preset in the server, and the type of the warehouse sorting requirement is automatically determined according to the correspondence.

In an example, in a case that a total number of goods containers occupied by current goods is far greater than a minimum goods container number required by the current goods, namely, the goods are distributed in a plurality of goods containers and occupation rates of internal space of most of the goods containers are relatively small, a warehouse sorting requirement for improving the storage density may be generated, to concentrate the goods in a relatively small number of goods containers, thereby improving the utilization of a warehouse.

In another example, in a case that there is a batch of outbound plans in a future time, a warehouse sorting requirement for improving the outbound efficiency may be generated according to the outbound plans, to save outbound time and costs.

The examples provided above are merely used for describing some implementations in which the server automatically determines the type of the warehouse sorting requirement, and adjustment and extension may be performed by a person skilled in the art based on the examples, which is not limited in the embodiments of the present disclosure.

In operation 202: warehouse sorting task information is determined according to the type of the warehouse sorting requirement, the warehouse sorting task information includes information about to-be-sorted goods, information about a sorted-out container in which the goods are currently located, and information about a corresponding target container, to move the goods from the sorted-out container to the target container.

Optionally, the information about the goods may be information such as a name or an identifier of the goods. The information about the sorted-out container/target container may be an identifier or a specific storage position of the sorted-out container/target container. According to the information about the goods, the information about the sorted-out container, and the information about the target container, a user and/or a robot may find the corresponding goods, the sorted-out container, or the target container.

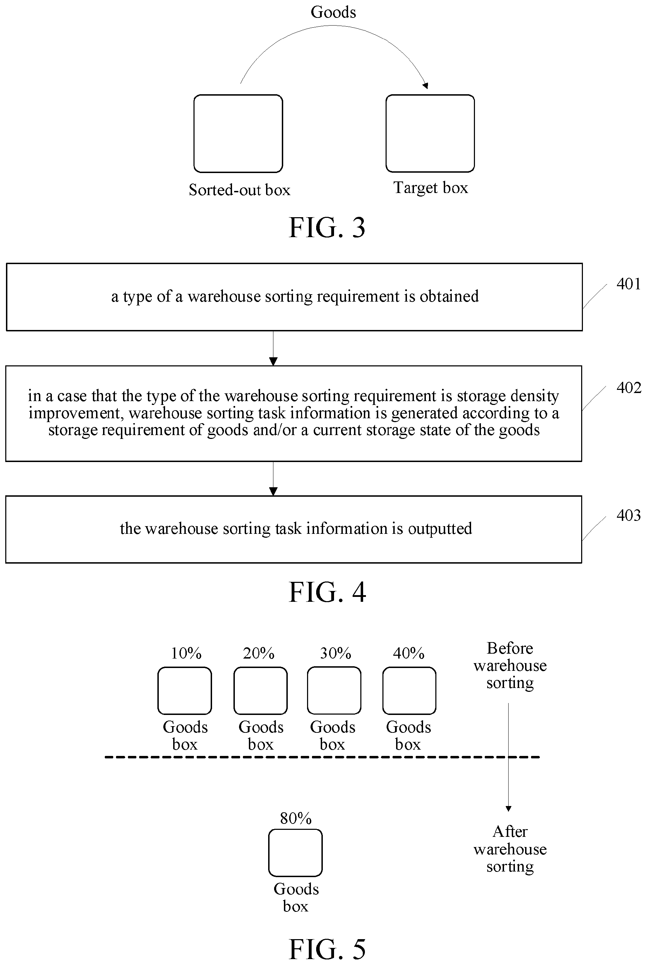

The sorted-out container is a goods container in which the goods are currently located. The target container is a target goods container to which the goods will be sorted. FIG. 3 is a schematic diagram of a principle of sorting goods according to an embodiment of the present disclosure. As shown in FIG. 3, goods may be taken out from a sorted-out container and placed in a target container, to sort the goods.

In operation 203: the warehouse sorting task information is outputted.

In this embodiment, the warehouse sorting task information may be outputted to the user and/or the robot, so that the user and/or the robot may execute the warehouse sorting task information.

Optionally, the information about the sorted-out container and the information about the target container in the warehouse sorting task information may be transmitted to a robot, to cause the robot to carry the sorted-out container and the target container from a storage region to a preset region according to the warehouse sorting task information_{∘} The information about the sorted-out container, the information about the target container, and the information about the goods in the warehouse sorting task information may be displayed to the user, to cause the user to move the goods from the sorted-out container to the target container in the preset region.

After the to-be-sorted goods are moved from the sorted-out container to the target container, the server may further control the robot to carry the target container to the storage region. In a case that other goods still exist in the sorted-out container, the sorted-out container is carried to the storage region, and in a case that the sorted-out container is cleared, the sorted-out container is carried to a region configured to place empty containers.

The region configured to place empty containers may be the storage region or may be another region other than the storage region.

Specifically, after the warehouse sorting task information is determined, the server may control the robot to carry the sorted-out container and the target container from the storage region to the preset region, and display the warehouse sorting task information to the user, so that the user may sort the goods carried to the preset region according to the warehouse sorting task information.

There are a plurality of methods for displaying the warehouse sorting task information to the user. For example, the warehouse sorting task information may be displayed to the user through a display screen, or the warehouse sorting task information may be transmitted to a terminal such as a mobile phone carried by the user, to cause the mobile phone to display the warehouse sorting task information to the user, so that the user may sort the goods carried to the storage region according to the warehouse sorting task information, to take out the goods from the sorted-out container and place the goods in the corresponding target container.

When the sorted-out container is cleared, the server may control, according to a service requirement, the robot to carry the cleared sorted-out container to the storage region or directly take out the cleared sorted-out container. When the target container is filled up, the server may instruct the user to perform a container sealing operation and instruct the robot to carry the target container to the storage region, to realize a warehouse sorting function through cooperation between the robot and the user.

In other optional implementations, the warehouse sorting task information may all be transmitted to the robot, so that the robot to implement an automatic warehouse sorting task. Specifically, that the server outputs the warehouse sorting task information may include: transmitting the warehouse sorting task information to a robot, to cause the robot to move the to-be-sorted goods from the corresponding sorted-out container to the target container according to the warehouse sorting task information.

For example, the robot may be provided with an apparatus that can take out goods from a goods container such as a mechanical arm, recognize corresponding goods in the sorted-out container through a near field communication (NFC) tag or image recognition, and take out the goods and place the goods in the target container through the mechanical arm.

Optionally, the transmitting the warehouse sorting task information to a robot, to cause the robot to move the to-be-sorted goods from the corresponding sorted-out container to the target container according to the warehouse sorting task information may include: instructing the robot to carry a sorted-out container loading the to-be-sorted goods to move, to sort the to-be-sorted goods in the sorted-out container to at least one target container; and/or instructing the robot to carry a target container to move, to take out the to-be-sorted goods from at least one sorted-out container and sort the to-be-sorted goods to the target container.

In an actual application, the robot may directly carry away a sorted-out container loading one or more to-be-sorted goods, and sort the goods in the sorted-out container to one or more target containers. Conversely, a target container may be carried to one or more sorted-out containers to take out goods, thereby improving the warehouse sorting efficiency.

Optionally, the sorted-out container carried by the robot is a goods container that is estimated to be cleared after the warehouse sorting task information is completed. In addition, in a case that the sorted-out container is cleared, the robot is instructed to carry the sorted-out container to a region configured to place empty containers or use the sorted-out container as a target container for warehouse sorting, to prevent goods containers from being frequently taken out or stored, thereby further improving the warehouse sorting efficiency. After the to-be-sorted goods are moved from the sorted-out container to a corresponding target container, the robot is instructed to carry the target container to the storage region. Therefore, the warehouse sorting function is realized through the robot without manual participation, thereby effectively saving manpower. Alternatively, the warehouse sorting task information may be only transmitted to the user, for the user to head to the warehouse and sort the goods according to the warehouse sorting task information.

It may be understood that, in the embodiments of the present disclosure, there may be one or more to-be-sorted goods corresponding to the warehouse sorting task information. In a case that there are a plurality of to-be-sorted goods, there may also be a plurality of specific storage situations of the plurality of goods. For example, each goods may correspond to one sorted-out container/target container, or at least two goods correspond to a same sorted-out container/target container. In addition, a sorted-out container corresponding to one goods may be a target container corresponding to another goods, which is not limited in the embodiments of the present disclosure.

According to the warehouse sorting method provided in this embodiment, a type of a warehouse sorting requirement may be obtained; warehouse sorting task information is determined according to the type of the warehouse sorting requirement, the warehouse sorting task information including information about to-be-sorted goods, information about a sorted-out container in which the goods are currently located, and information about a corresponding target container, to move the goods from the sorted-out container to the target container; and the warehouse sorting task information is outputted. Therefore, the user and/or the robot may execute the warehouse sorting task information and construct the warehouse sorting task information according to the type of the warehouse sorting requirement to guide warehouse sorting, to sort stored goods in time, thereby performing management on a warehouse more efficiently and improving a use effect of the warehouse.

Based on the technical solution provided in the foregoing embodiments, optionally, the warehouse sorting task information may be executed after being modified or confirmed by the user. Certainly, modification or confirmation by the user may not be necessary, and the server may directly generate and output the warehouse sorting task information according to an own requirement.

Specifically, the server may automatically generate initial warehouse sorting task information, where the warehouse sorting task information may include information about goods and information about a corresponding sorted-out container/target container. The warehouse sorting task information may be confirmed or modified by the user, the server may obtain and output the warehouse sorting task information modified or confirmed by the user. The warehouse sorting task information that the user does not confirm or close does not need to be executed, thereby ensuring that the goods are correctly processed and improving a warehouse sorting effect.

In other optional implementations, the server may first generate some information of the information about the goods, the information about the sorted-out container, and the information about the target container and transmit the information to the user for confirmation. For example, the server first generates the information about the goods and the information about the sorted-out container, and then generates the information about the corresponding target container after the user modifies or confirms the information about the goods and the information about the sorted-out container.

Optionally, the server may generate warehouse sorting task information according to instructions of the user. For example, the server may obtain a type of a warehouse sorting requirement inputted by the user, and generate warehouse sorting task information according to the type of the warehouse sorting requirement for the user to modify or confirm, so that an inventory is adjusted more flexibly without depending on an inbound order, so that an inventory adjustment requirement of a service may be responded quickly. Different warehouse sorting requirement types may correspond to different warehouse sorting strategies. Alternatively, the server may count a current inventory situation at regular intervals and automatically generate warehouse sorting task information when a specific condition is met for the user to confirm or modify, thereby improving the warehouse sorting flexibility.

A user confirming or modifying the warehouse sorting task information and a user executing the warehouse sorting task information may be the same or may be different, which is not limited in this embodiment.

The foregoing describes specific implementations that the user confirms the warehouse sorting task information. It may be understood by a person skilled in the art that confirmation by the user is not a necessary operation, and the server may directly generate and output the warehouse sorting task information according to an own requirement with participation of the user, thereby improving the warehouse sorting flexibility.

FIG. 4 is a schematic flowchart of another warehouse sorting method according to an embodiment of the present disclosure. This embodiment provides a warehouse sorting method for improving the storage density based on the solutions described in the foregoing embodiments. As shown in FIG. 4, the warehouse sorting method may include the following operations:
In operation 401: a type of a warehouse sorting requirement is obtained.
In operation 402: in a case that the type of the warehouse sorting requirement is storage density improvement, warehouse sorting task information is generated according to a storage requirement of goods and/or a current storage state of the goods.

When the type of the warehouse sorting requirement is configured as storage density improvement, an objective of generating the warehouse sorting task information may be to cause a number of goods containers occupied by the goods after sorting to be less than a number of goods containers occupied by the goods before sorting, thereby reducing a number of goods containers and improving the storage density.

FIG. 5 is a schematic diagram of a warehouse sorting effect of storage density improvement according to an embodiment of the present disclosure. FIG. 5 shows a plurality of goods containers, where a specific number of goods are placed in each goods container, and for a current storage amount, namely, currently occupied space of each goods container, reference may be made to numbers above each goods container. Before warehouse sorting, current storage amounts of four goods containers are respectively 10%, 20%, 35%, and 15%. By sorting the goods, the goods may be placed in a same goods container, only one goods container is occupied after warehouse sorting, and a storage amount of the goods container is 10%+20%+35%+15%=80%, thereby effectively saving goods containers, improving the storage density, and reducing warehousing costs.

Optionally, the generating the warehouse sorting task information according to the storage requirement of goods and/or the current storage state of the goods may include: obtaining a number of savable goods containers through warehouse sorting according to a total number of goods containers currently occupied by goods stored in the storage region and a total number of goods containers estimated to be occupied by the stored goods after warehouse sorting; calculating an estimated warehouse sorting time required for warehouse sorting; and generating, in a case that the number of the savable goods containers and the estimated warehouse sorting time meet a preset condition, the warehouse sorting task information according to the storage requirement of the goods and/or the current storage state of the goods. In a case that the number of the savable goods containers and the estimated warehouse sorting time do not meet the preset condition, warehouse sorting warning information is generated.

Specifically, when the server generates warehouse sorting task information, a total number of goods containers occupied by the goods in the storage region and a total amount of remaining inventories may be considered, so that the number of savable goods containers after warehouse sorting and the estimated warehouse sorting time are estimated, and the warehouse sorting task information is generated only when the estimated number of savable goods containers and the estimated warehouse sorting time meet the preset condition.

The preset condition may be set according to an actual requirement. Optionally, determination of the preset condition may be implemented through scores. Specifically, a score of a difference between the total number of goods containers currently occupied by the goods in the storage region and the total number of goods containers estimated to be occupied after warehouse sorting is a container number score, and a score of the estimated warehouse sorting time is a labor time score. When the container number score is greater than the labor time score, the warehouse sorting task information is generated, and when the container number score is less than the labor time score, the warehouse sorting warning information is generated to warn warehouse sorting instead of executing a warehouse sorting task this time.

A specific score strategy may have a plurality of implementations. It may be understood that, a greater difference between the numbers of goods containers indicate a higher container number score, and a longer estimated warehouse sorting time indicates a higher labor time score.

By determining whether to generate the warehouse sorting task information according to the number of savable goods containers and the estimated warehouse sorting time, a case that a lot of manpower and material resources are consumed but a warehouse sorting result is not good can be avoided to some extent, thereby improving a warehouse sorting effect.

After determining that warehouse sorting needs to be performed, the warehouse sorting task information may be generated according to the storage requirement of the goods and/or the current storage state of the goods.

In an optional implementation, when the warehouse sorting task information is generated, the storage requirement of the goods may be considered. Optionally, the generating the warehouse sorting task information according to storage requirement of goods may include: obtaining identity information (for example, serial numbers of the goods) and/or attribute information of the goods; determining corresponding storage requirement according to the identity information and/or attribute information of the goods; and generating the warehouse sorting task information according to the storage requirement, where the attribute information includes at least one of the following: a production data, an original attribute (for example, a place of production), and information about an owner of the goods; and the storage requirement include at least one of the following: independent storage, mixed storage, and sequential storage.

The independent storage may refer to that goods of a same type may be stored in one goods container. The mixed storage refers to that different goods may be stored in one goods container and a storage sequence thereof is not limited. The sequential storage may refer to that different goods may be stored in one goods container and a storage sequence thereof is limited, for example, goods A need to be placed below goods B.

Specifically, when the server automatically generates the warehouse sorting task information, an attribute requirement which has a strict service requirement may be followed. For example, when the storage requirement of the goods are the independent storage, the generated warehouse sorting task information may not cause a case that goods are stored in a mixed manner. In another example, in a case that same goods of different goods owners cannot be stored in a same goods container, the warehouse sorting task information generated by the server may not cause a case that goods of a plurality of goods owners are stored in a mixed manner.

Optionally, a correspondence between the identity information and/or attribute information and the storage requirement of the goods may be stored in the server. For example, the correspondence may be saved through a mapping relationship table, and the storage requirement corresponding to the goods are determined according to the correspondence.

By obtaining the identity information and/or the attribute information of the goods, the corresponding storage requirement is determined, and the warehouse sorting task information is determined according to the storage requirement, so that the warehouse sorting task information can meet the storage requirement of the goods and ensure the security of the goods.

In another optional implementation, when the warehouse sorting task information is generated, a type of the target container may be considered. Optionally, the generating the warehouse sorting task information according to the current storage state of the goods may include: determining a type of a target container corresponding to the goods according to current storage state of the to-be-sorted goods; and generating the warehouse sorting task information according to the determined type of the target container.

The type of the target container may include at least one of the following: a paper container, a plastic container, a leather container, and a metal container.

When the type of the target container corresponding to the goods is determined according to the current storage state of the to-be-sorted goods, in a case that goods to be placed in a same target container currently only occupy one type of goods containers in the storage region, a goods container of the type may be superior to goods containers of other types to be used as the target container of the goods.

For example, when the to-be-sorted goods only occupy plastic containers in the storage region and do not occupy goods containers of other types, in the generated warehouse sorting task information, plastic containers are preferentially used as the target container corresponding to the goods, to improve the goods sorting efficiency and avoid bad effects caused by using goods containers of different types.

In a case that goods to be placed in a same target container currently occupy a plurality of types of goods containers in the storage region, the type of the target container may be selected from the plurality of types of goods containers according to numbers of goods currently stored in each of the plurality of types of goods containers and/or inbound times of the goods.

Specifically, in a case that the goods occupy a plurality of types of goods containers in the storage region, a score corresponding to each goods container type may be calculated according to a number of goods stored in goods containers of each type and inbound times of the goods stored in the goods containers, and a type corresponding to a highest score is used as a preferential type. When the target container is selected, the target container may be preferentially selected from goods containers of the preferential type, and the preferential type may also be pushed to the user to support modification by the user.

A specific calculation method of the score may be set according to an actual requirement, which is not limited in this embodiment. By determining the type of the target container first and then determining the target container, a suitable target container may be selected for the goods quickly and efficiently, thereby improving a warehouse sorting effect.

Certainly, when the target container is selected, the attribute information and the storage requirement of the goods may also be considered, and a target container type with a highest score is selected from target container types meeting the attribute information or the storage requirement of the goods as the preferential target container type, to ensure that the goods are stored securely.

In still another optional implementation, when the warehouse sorting task information is generated, a storage capacity of a goods container and spaced occupied by the to-be-sorted goods may be considered. Optionally, the generating the warehouse sorting task information according to current storage state of the goods may include: in a case that goods to be placed in a same target container come from a plurality of selectable goods containers, the target container is determined according to space occupied by the goods and remaining space of each selectable goods container; and generating the warehouse sorting task information according to the determined target container.

Specifically, it is assumed that the space occupied by the goods is V, a goods container whose remaining space is greater than V may be selected as the corresponding target container. Further, in a case that there are a plurality of goods containers whose remaining space is greater than V, a goods container with minimum remaining space may be selected from the plurality of goods containers whose remaining space is greater than V as the target container.

For example, the to-be-sorted goods are currently distributed in 3 goods containers and respectively occupy 10%, 15%, and 20% of a volume of one goods container, which totally occupy 45% of a volume of one goods container. In this case, in a case that two goods containers with 10% and 50% remaining space are selectable, the goods container with 50% remaining space may be selected as the target container, so that the goods are stored in a more compact manner and the storage density is improved.

The foregoing provides some optional warehouse sorting strategies for improving the storage density. It may be understood that the foregoing strategies may be used independently or may be used in combination, which is not limited in this embodiment.

In operation 403: the warehouse sorting task information is outputted.

Optionally, the warehouse sorting task information may be outputted to the user and/or the robot, so that the user and/or the robot may execute the warehouse sorting task information. In this embodiment, for a specific implementation principle and process of operation 403, reference may be made to the foregoing embodiments, and details are not described herein again.

According to the warehouse sorting method provided in this embodiment, when the type of the warehouse sorting is storage density improvement, the warehouse sorting task information may be generated according to the storage requirement of the goods and the current storage state of the goods, so that warehouse sorting can be realized by combining the storage requirement and the current storage state. Considering the storage requirement can ensure that the goods after warehouse sorting meet the storage requirement, and performing warehouse sorting by considering the current storage state can improve the warehouse sorting efficiency, thereby improving the storage density more efficiently and reducing warehousing costs.

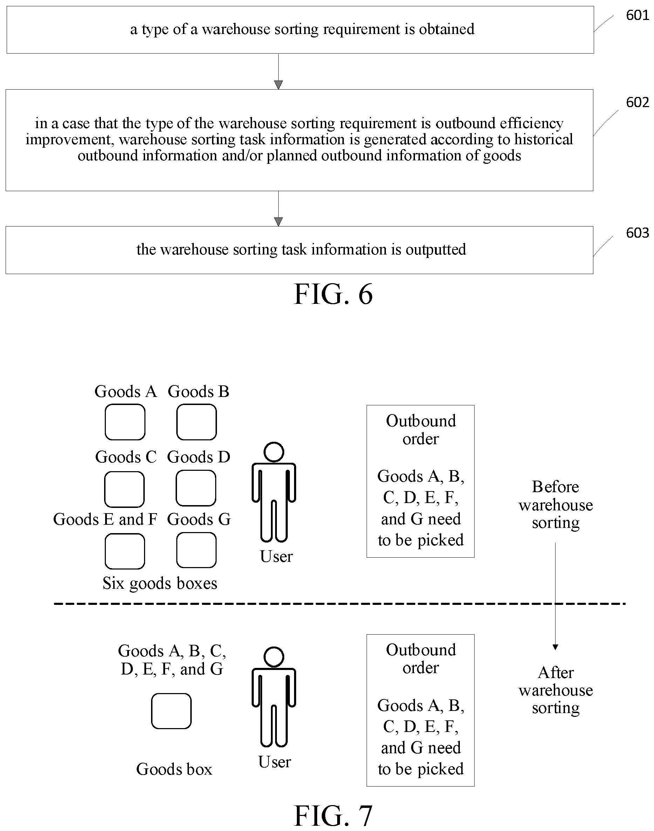

FIG. 6 is a schematic flowchart of another warehouse sorting method according to an embodiment of the present disclosure. This embodiment provides a warehouse sorting method for improving the outbound efficiency based on the solutions described in the foregoing embodiments. As shown in FIG. 6, the warehouse sorting method may include the following operations:
In operation 601: a type of a warehouse sorting requirement is obtained.
In operation 602: in a case that the type of the warehouse sorting requirement is outbound efficiency improvement, warehouse sorting task information is generated according to historical outbound information and/or planned outbound information of goods.

When the type of the warehouse sorting requirement is configured as outbound efficiency improvement, an objective of generating the warehouse sorting task information may be to cause an outbound time of the goods after sorting to be less than an outbound time of the goods before sorting. Specifically, the outbound time of the goods may be reduced by sorting goods outbound simultaneously or to be outbound simultaneously together, to improve the outbound efficiency.

FIG. 7 is a schematic diagram of a warehouse sorting effect of outbound efficiency improvement according to an embodiment of the present disclosure. As shown in FIG. 7, goods are stored in each goods container, and for a name of goods stored in each goods container, reference may be made to text above the goods container. Before warehouse sorting, goods stored in the six goods containers may respectively be: goods A, goods B, goods C, goods D, goods E and goods F, and goods G. During outbound, in a case that an outbound order includes the goods A, B, C, D, E, F, and G, the user needs to pick out the corresponding goods from the sixth goods containers respectively, and the outbound efficiency is low.

By sorting the goods, the goods A, B, C, D, E, F, and G outbound simultaneously are placed in a same goods container. Therefore, during outbound, the goods A, B, C, D, E, F, and G can be found in one goods container, thereby effectively improving the outbound efficiency and reducing the outbound time.

In an optional implementation, when the server generates the warehouse sorting task information, an outbound order may be considered. The outbound order described in this embodiment may refer to a document for implementing goods outbound, such as an order or a delivery order. Outbound orders that have been finished and/or have not been finished may be counted, and in a case that first goods and second goods generally appear in a same outbound order, the first goods and the second goods in the storage region may be sorted together.

That the first goods and the second goods generally appear in a same outbound order may refer to that a number of times that the first goods and the second goods appear in the same outbound order meet a preset times requirement.

The preset number requirement may be set according to an actual requirement. For example, the preset times requirement may refer to that the number of times that the first goods and the second goods appear in a same warehouse sorting order is greater than a times threshold, or a ratio obtained by diving the number of times appearing on the same warehouse sorting order by a total number of warehouse sorting orders including the first goods or the second goods is greater than a ratio threshold. In a case that the foregoing preset times requirement is met, it may be considered that the first goods and the second goods generally appear in the same outbound order.

For example, the times threshold may be set to 100, and in a case that there are 120 outbound orders in total in which the first goods and the second goods appear simultaneously, it is considered that the first goods and the second goods generally appear in the same outbound order.

Alternatively, the ratio threshold may be set to 50%, it is assumed that there are 80 outbound orders in total in which the first goods and the second goods appear simultaneously, and there are 100 outbound orders in total in which only the first goods appear, only the second goods appear, and the first goods and the second goods appear simultaneously, 80/100 is greater than 50%, and it is considered that the first goods and the second goods generally appear in the same outbound order.

In a mixed storage scenario, goods in the target container may be stored in a mixed manner by following outbound logic. In a case that the first goods and the second goods generally appear in a same outbound order, and an outbound number thereof is less than an accommodation capacity of a single goods container, the first goods and the second goods may be sorted to a same target container.

For example, when goods A and goods B generally appear in a same outbound order and an outbound number thereof is less than an accommodation capacity of a single goods container, the server may automatically generate warehouse sorting task information about the goods A and the goods B, to instruct the user to sort the goods A and the goods B to a same target container. That the outbound number is less than an accommodation capacity of a single goods container may refer to that in all or most outbound orders, the outbound number is less than an accommodation capacity of a single goods container. Detailed description is provided below.

Specifically, the generating warehouse sorting task information according to historical outbound information of goods may include: generating the warehouse sorting task information in a case that a number of times that first goods and second goods appear in a same outbound order meets a preset times requirement and an outbound number of the first goods and the second goods in the same outbound order meets a preset outbound number requirement, where the warehouse sorting task information is configured to sort at least a part of the first goods and at least a part of the second goods in the storage region to a same target container.

For details that the number of times that the first goods and the second goods appear in the same outbound order meets the preset times requirement, reference may be made to the solution described above. That the outbound number of the first goods and the second goods in the same outbound order meets the preset outbound number requirement may refer to that in all or most outbound orders in which the first goods and the second goods appear simultaneously, an outbound number of the first goods and the second goods is each outbound order is less than an accommodation capacity of a single goods container. That the outbound number of the first goods and the second goods in an outbound order is less than an accommodation capacity of a single goods container may refer to that a sum of occupied space corresponding to an outbound number of the first goods and occupied space corresponding to an outbound number of the second goods in the outbound order is less than accommodation space of a single goods container.

For example, in a case that an outbound number of the first goods is 10 and an outbound number of the second goods is 10 in an outbound order, the 10 first goods occupy 50% of accommodation space of a single goods container, the 10 second goods occupy 40% of accommodation space of a single goods container, and 50%+40% is less than an accommodation capacity of a single goods container. Therefore, it may be considered that the outbound number of the first goods and the second goods in the outbound order is less than an accommodating cavity of a single goods container. In a case that all or most outbound orders meet the condition that the outbound number is less than an accommodation capacity of a single goods container, it indicates that the outbound number of the first goods and the second goods in the same outbound order meets the preset outbound number requirement. The most outbound orders may refer to outbound orders whose number exceeds a specific threshold such as 80%.

In a case that the first goods and the second goods generally appear in a same outbound order and an outbound number thereof is less than an accommodation number of a single container, warehouse sorting task information may be generated to sort the first goods and the second goods to a same target container. The number of first goods and the number of second goods to be placed in the same target container may be determined according to outbound orders. For example, in a case that an outbound number of the first goods is 10 and an outbound number of the second goods is 10 in most outbound orders, the 10 first goods and the 10 second goods may be sorted to the same target container.

According to the foregoing described solution of counting the outbound orders to sort the goods, goods that are generally outbound simultaneously may be sorted to the same target container, thereby improving the outbound efficiency.

Similarly, when the first goods and the second goods generally appear in a same outbound order and an outbound number thereof is less than accommodation capacities of N goods containers, warehouse sorting task information may be generated to sort the first goods and the second goods to N target containers.

In another optional implementation, when the warehouse sorting task information is generated, planned outbound information such as an outbound order that is not finished of goods may be considered. The outbound order that is not finished may be a planned outbound document, which may include an outbound order that has been determined by a customer but has not been finished, or may include an estimated outbound document that has not been determined by a customer and generated according to a possible service requirement.

Optionally, the generating warehouse sorting task information according to planned outbound information of goods may include: generating the warehouse sorting task information in a case that outbound numbers corresponding to all goods in an outbound order that is not finished are less than an accommodation capacity of a single goods container, where the warehouse sorting task information is configured to sort all the goods corresponding to the outbound order to a same target container.

For example, in a case that an accommodation capacity of a single goods container accommodates 20 goods A and 20 goods B at most, and 10 goods A and 10 goods B are included in an outbound order, warehouse sorting task information may be generated to instruct the user to sort the 10 goods A and the 10 goods B in the outbound order to a same target container.

By considering the planned outbound order to sort the goods, goods planned to be outbound may be placed in a same target container, thereby improving the outbound efficiency.

In still another implementation, when the warehouse sorting task information is generated, an outbound frequency of goods and an outbound order structure may be considered. Optionally, the generating warehouse sorting task information according to planned outbound information of goods may include: generating the warehouse sorting task information in a case that an outbound number of first goods in an outbound order that is not finished or a plurality of adjacent outbound orders is greater than an accommodation capacity of a single goods container and the first goods are currently distributed in a plurality of goods containers, where the warehouse sorting task information is configured to sort the first goods in at least two goods containers among the plurality of goods containers to a same target container.

The plurality of adjacent outbound orders are a plurality of outbound orders in which a difference between outbound times corresponding to any two outbound orders is less than a preset time difference.

For example, in a case that in a single outbound order or a plurality of adjacent outbound orders, a total outbound number of goods A exceeds an accommodation capacity of a single goods container, the warehouse sorting task information may instruct the user to sort the goods A distributed in a plurality of goods containers to a same target container.

In a case that the goods are not sorted, when the goods A are outbound according to the single outbound order or the plurality of adj acent outbound orders, the goods A need to be taken out from the plurality of goods containers, and the efficiency is low. After the goods are sorted, the goods A may be directly taken out from the target container, to meet an outbound requirement on the goods A of the single outbound order or the plurality of adjacent outbound orders, thereby improving the outbound efficiency.

The foregoing provides some optional warehouse sorting strategies for improving the outbound efficiency. It may be understood that the foregoing strategies may be used independently or may be used in combination, which is not limited in this embodiment.

In operation 603: the warehouse sorting task information is outputted.

In this embodiment, for a specific implementation principle and process of step 603, reference may be made to the foregoing embodiments, and details are not described herein again.

According to the warehouse sorting method provided in this embodiment, when the type of the warehouse sorting requirement is outbound efficiency improvement, the warehouse sorting task information is generated according to the historical outbound information and the planned outbound information of the goods. By sorting the goods according to the historical outbound situation and the planned outbound situation of the goods, storage of the goods can be more applicable to outbound, thereby improving the outbound efficiency.

Based on the technical solutions provided in the foregoing embodiments, optionally, the warehouse sorting task information transmitted by the server to the robot may further include space recorded information of the target container and/or the sorted-out container, to cause the robot to start an alternative operation in a case of detecting that space actual information of the target container and/or the sorted-out container does not match the space recorded information.

The space recorded information may be space information in a container recorded on the server side, and the space actual information may be actual space information in the container detected by the robot. For example, the space recorded information may include at least one of the following: size information of goods in the container, information about space occupied by goods in the container, information about remaining space in the container, or information about available space in the container.

Optionally, the size information of goods in the container may include size information corresponding to each goods in the container. The information about space occupied by goods in the container may be a size of the space occupied by the goods stored in the container. The information about remaining space in the container may be a value obtained by subtracting the size of the space occupied by the goods stored in the container from a size of total accommodation space in the container. The information about available space in the container includes a size of usable space in the container.

In some cases, the information about remaining space in the container may not be equivalent to the information about available space in the container. For example, a shape of the goods may be irregular, so that the information about available space in the container may be less than the information about remaining space in the container.

Optionally, space recorded information of each goods container may be determined through machine learning according to a volume of goods, information about goods placed in a container body, space information in a container body, and value changes of an inventory storage situation.

Specifically, in an actual application, goods containers in a warehouse and specific states of goods are continuously changed. The space information in the goods container, the information about stored goods, and the inventory storage situation of goods such as an inventory number, a distribution situation and the volume of the goods may all affect the space recorded information of the goods container. According to the foregoing information, the space recorded information of the goods container may be learned and updated continuously through machine learning, thereby improving the accuracy of the space recorded information.

The robot may photograph internal space of the target container and/or the sorted-out container through a visual sensor, and determine the space actual information by analyzing a photographed image. Optionally, the determining, by the robot, the space actual information by analyzing a photographed image may include: determining the space actual information according to multi-dimensional information and/or depth information corresponding to the photographed image.

A plurality of visual sensors may be provided, multi-dimensional stereoscopic space information in the container may be constructed through multi-view detection, and the depth information may be determined according to point cloud data corresponding to the photographed image, so that the space actual information is calculated more efficiently and accurately.

Optionally, the robot may further perceive internal space of the target container and/or the sorted-out container through a distance sensor, and determine the space actual information by analyzing a perception result.

The distance sensor may include at least one of the following: an infrared sensor, a laser sensor, or a sound wave sensor, so that the space actual information can be determined simply and quickly, thereby improving the processing efficiency.

Optionally, that the robot starts an alternative operation may include at least one of the following: reporting mismatching information to the server, for example, space actual information and space recorded information of a goods container A do not match, the space actual information of the goods container A is reported to the server to cause the server to verify or update the corresponding space recorded information; adjusting positions of goods in the target container through a mechanical arm, and further reporting adjusted actual information to the server for recording; and issuing warning information, to prompt the user for viewing and adjustment.

Based on the technical solutions provided in the foregoing embodiments, optionally, the warehouse sorting task information further includes goods recorded information of the target container and/or the sorted-out container, to cause the robot to start an alternative operation in a case of detecting that goods actual information of the target container and/or the sorted-out container does not match the goods recorded information.

Optionally, the robot may determine the goods actual information of the target container and/or the sorted-out container according to at least one of a one-dimensional code, a two-dimensional code, or a radio frequency tag. For example, the foregoing identifier or tag may be provided on goods containers and goods, and the robot may determine information about goods in a container by scanning the one-dimensional code, the two-dimensional code, or the radio frequency tag, which has a simple structure and is easy to implement.

According to the method described above, the server may transmit the recorded information of the goods container or goods to the robot, and the robot may start an alternative operation in a case of finding that the recorded information does not match actual information during operation, to report the actual information to the server, issue warning, or adjust the goods container or the goods through a mechanical arm. Therefore, the recorded information on the server side can be verified and adjusted in time in a warehouse sorting process, thereby improving the accuracy of the recorded information on the server side and facilitating subsequent operations.

Based on the technical solutions provided in the foregoing embodiments, optionally, the target container may be a goods container randomly selected by the server or the user. The randomly selected goods container is an empty container or a goods container in which goods are placed. The server may determine other information required for the warehouse sorting task information according to the randomly selected goods container, to construct the warehouse sorting task information.

For example, in some scenarios, the server or the user may randomly select one or more goods containers as a target container. In a case that the target container is determined, the server may infer other information required for the warehouse sorting task information such as the information about the sorted-out container and the information about the to-be-sorted goods according to the selected target container, to construct the warehouse sorting task information. This solution allows the system or the user to randomly select a target container to construct the warehouse sorting task information, so that a warehouse sorting operation is implemented more flexibly.

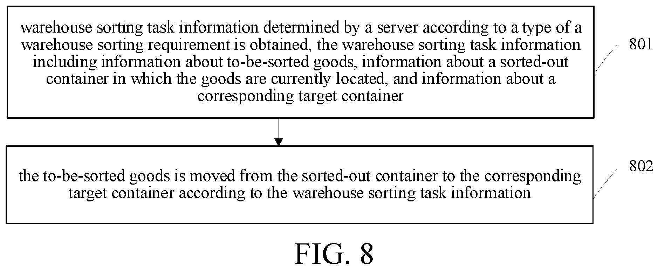

FIG. 8 is a schematic flowchart of yet another warehouse sorting method according to an embodiment of the present disclosure. The method in this embodiment may be applicable to a robot. As shown in FIG. 8, the method includes:
In operation 801: warehouse sorting task information determined by a server according to a type of a warehouse sorting requirement is obtained, the warehouse sorting task information including information about to-be-sorted goods, information about a sorted-out container in which the goods are currently located, and information about a corresponding target container.
In operation 802: the to-be-sorted goods is moved from the sorted-out container to the corresponding target container according to the warehouse sorting task information.

In a possible design, the type of the warehouse sorting requirement includes storage density improvement and/or outbound efficiency improvement.

In a possible design, the moving the to-be-sorted goods from the sorted-out container to the corresponding target container includes: carrying a sorted-out container loading the to-be-sorted goods to move, to sort the to-be-sorted goods in the sorted-out container to at least one target container; and/or carrying a target container to move, to take out the to-be-sorted goods from at least one sorted-out container and sort the to-be-sorted goods to the target container.

In a possible design, the carried sorted-out container is a goods container that is estimated to be cleared after the warehouse sorting task information is completed.

In a possible design, the method further includes: in a case that the sorted-out container is cleared, carrying the sorted-out container to a region configured to place empty containers or using the sorted-out container as a target container for warehouse sorting; and/or after the to-be-sorted goods are moved from the sorted-out container to a corresponding target container, carrying the target container to a storage region.

In a possible design, the warehouse sorting task information further includes space recorded information of the target container and/or the sorted-out container, and the method further includes: starting an alternative operation in a case of detecting that space actual information of the target container and/or the sorted-out container does not match the space recorded information.

In a possible design, the space recorded information includes at least one of the following: size information of goods in the container, information about space occupied by goods in the container, information about remaining space in the container, or information about available space in the container.

In a possible design, the method further includes: photographing internal space of the target container and/or the sorted-out container through a visual sensor, and determining the space actual information by analyzing a photographed image.

In a possible design, the determining the space actual information by analyzing a photographed image includes: determining the space actual information according to multi-dimensional information and/or depth information corresponding to the photographed image.

In a possible design, the method further includes: perceiving internal space of the target container and/or the sorted-out container through a distance sensor, and determining the space actual information by analyzing a perception result.

In a possible design, the distance sensor includes at least one of the following: an infrared sensor, a laser sensor, or a sound wave sensor.

In a possible design, the starting an alternative operation includes at least one of the following: reporting mismatching information to the server, adjusting positions of goods in the target container through a mechanical arm, or issuing warning information.

In a possible design, the warehouse sorting task information further includes goods recorded information of the target container and/or the sorted-out container, and the method further includes:
starting an alternative operation in a case of detecting that goods actual information of the target container and/or the sorted-out container does not match the goods recorded information.

In a possible design, the method further includes: determining the goods actual information of the target container and/or the sorted-out container according to at least one of a one-dimensional code, a two-dimensional code, or a radio frequency tag.

For a specific implementation principle, process, and beneficial effects of the method provided in this embodiment, reference may be made to the foregoing embodiments, and details are not described herein again.

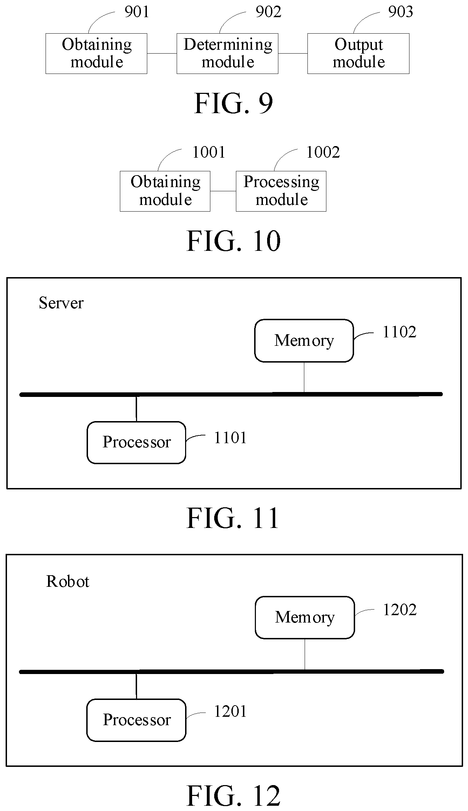

FIG. 9 is a schematic structural diagram of a warehouse sorting apparatus according to an embodiment of the present disclosure. The warehouse sorting apparatus shown in FIG. 9 may be applicable to a server, such as the server 30 in FIG. 1. As shown in FIG. 9, the apparatus may include:
an obtaining module 901, configured to obtain a type of a warehouse sorting requirement;
a determining module 902, configured to determine warehouse sorting task information according to the type of the warehouse sorting requirement, the warehouse sorting task information including information about to-be-sorted goods, information about a sorted-out container in which the goods are currently located, and information about a corresponding target container, to move the goods from the sorted-out container to the target container; and an output module 903, configured to output the warehouse sorting task information.

In a possible design, the type of the warehouse sorting requirement includes storage density improvement and/or outbound efficiency improvement.

In a possible design, the output module 903 is specifically configured to:
transmit the information about the sorted-out container and the information about the target container in the warehouse sorting task information to a robot, to cause the robot to carry the sorted-out container and the target container from a storage region to a preset region according to the warehouse sorting task information; and
display the information about the sorted-out container, the information about the target container, and the information about the goods in the warehouse sorting task information to a user, to cause the user to move the goods from the sorted-out container to the target container in the preset region.

In a possible design, the output module 903 is specifically configured to:
transmit the warehouse sorting task information to a robot, to cause the robot to move the to-be-sorted goods from the corresponding sorted-out container to the target container according to the warehouse sorting task information.

In a possible design, the output module 903 is specifically configured to:
instruct the robot to carry a sorted-out container loading the to-be-sorted goods to move, to sort the to-be-sorted goods in the sorted-out container to at least one target container; and/or,
instruct the robot to carry a target container to move, to take out the to-be-sorted goods from at least one sorted-out container and sort the to-be-sorted goods to the target container.

In a possible design, the sorted-out container carried by the robot is a goods container that is estimated to be cleared after the warehouse sorting task information is completed.

In a possible design, the output module 903 is further configured to:
instruct, in a case that the sorted-out container is cleared, the robot to carry the sorted-out container to a region configured to place empty containers or use the sorted-out container as a target container for warehouse sorting; and/or instruct, after the to-be-sorted goods are moved from the sorted-out container to a corresponding target container, the robot to carry the target container to a storage region.

In a possible design, the obtaining module 901 is specifically configured to:
determine the type of the warehouse sorting requirement according to at least one of a goods inventory state, a goods container state, an inbound requirement, or an outbound requirement of the storage region; or
obtain the type of the warehouse sorting requirement inputted by the user.

In a possible design, when determining warehouse sorting task information according to the type of the warehouse sorting requirement, the determining module 902 is specifically configured to:
generate, in a case that the type of the warehouse sorting requirement is storage density improvement, the warehouse sorting task information according to storage requirement of goods and/or current storage state of the goods.

In a possible design, when generating the warehouse sorting task information according to storage requirement of goods and/or current storage state of the goods, the determining module 902 is specifically configured to:
obtain a number of savable goods containers through warehouse sorting according to a total number of goods containers currently occupied by goods stored in the storage region and a total number of goods containers estimated to be occupied by the stored goods after warehouse sorting;
calculate an estimated warehouse sorting time required for warehouse sorting; and
generate, in a case that the number of the savable goods containers and the estimated warehouse sorting time meet a preset condition, the warehouse sorting task information according to the storage requirement of the goods and/or the current storage state of the goods.

In a possible design, the determining module 902 is further configured to:
in a case that the number of the savable goods containers and the estimated warehouse sorting time do not meet the preset condition, generate warehouse sorting warning information.

In a possible design, when generating the warehouse sorting task information according to storage requirement of goods, the determining module 902 is specifically configured to:
obtain identity information and/or attribute information of the goods;
determine corresponding storage requirement according to the identity information and/or attribute information of the goods; and
generate the warehouse sorting task information according to the storage requirement, where
the attribute information includes at least one of the following: a production data, an original attribute, or information about an owner of the goods; and the storage requirement include at least one of the following: independent storage, mixed storage, or sequential storage.

In a possible design, when generating the warehouse sorting task information according to current storage state of the goods, the determining module 902 is specifically configured to:
determine a type of a target container corresponding to the goods according to current storage state of the to-be-sorted goods; and
generate the warehouse sorting task information according to the determined type of the target container.

In a possible design, when determining a type of a target container corresponding to the goods according to current storage state of the to-be-sorted goods, the determining module 902 is specifically configured to:
in a case that goods to be placed in a same target container currently only occupy one type of goods containers in the storage region, use a goods container of the type that is superior to goods containers of other types as the target container of the goods; and/or,
in a case that goods to be placed in a same target container currently occupy a plurality of types of goods containers in the storage region, select the type of the target container from the plurality of types of goods containers according to numbers of goods currently stored by the plurality of types of goods containers and/or inbound times of the goods.

In a possible design, when generating the warehouse sorting task information according to current storage state of the goods, the determining module 902 is specifically configured to:
in a case that goods to be placed in a same target container come from a plurality of selectable goods containers, determine the target container according to space occupied by the goods and remaining space of each selectable goods container; and
generate the warehouse sorting task information according to the determined target container.

In a possible design, when determining warehouse sorting task information according to the type of the warehouse sorting requirement, the determining module 902 is specifically configured to:
generate, in a case that the type of the warehouse sorting requirement is outbound efficiency improvement, the warehouse sorting task information according to historical outbound information and/or planned outbound information of goods.

In a possible design, when generating the warehouse sorting task information according to historical outbound information and/or planned outbound information of goods, the determining module 902 is specifically configured to:
generate the warehouse sorting task information in a case that a number of times that first goods and second goods appear in a same outbound order meets a preset times requirement and an outbound number of the first goods and the second goods in the same outbound order meets a preset outbound number requirement, where the warehouse sorting task information is configured to sort at least a part of the first goods and at least a part of the second goods in the storage region to a same target container.

In a possible design, when generating the warehouse sorting task information according to planned outbound information of goods, the determining module 902 is specifically configured to:
generate the warehouse sorting task information in a case that an outbound number corresponding to all goods in an outbound order that is not finished is less than an accommodation capacity of a single goods container, where the warehouse sorting task information is configured to sort all the goods corresponding to the outbound order to a same target container.

In a possible design, when generating the warehouse sorting task information according to planned outbound information of goods, the determining module 902 is specifically configured to:
generate the warehouse sorting task information in a case that an outbound number of first goods in an outbound order that is not finished or a plurality of adjacent outbound orders exceeds an accommodation capacity of a single goods container and the first goods are currently distributed in a plurality of goods containers, where the warehouse sorting task information is configured to sort the first goods in at least two goods containers among the plurality of goods containers to a same target container; and
the plurality of adjacent outbound orders are a plurality of outbound orders in which a difference between outbound times corresponding to any two outbound orders is less than a preset time difference.

In a possible design, the warehouse sorting task information further includes space recorded information of the target container and/or the sorted-out container, to cause the robot to start an alternative operation in a case of detecting that space actual information of the target container and/or the sorted-out container does not match the space recorded information.

In a possible design, the space recorded information includes at least one of the following: size information of goods in the container, information about space occupied by goods in the container, information about remaining space in the container, or information about available space in the container.

In a possible design, the obtaining module 901 is further configured to: determine space recorded information of each goods container through machine learning according to a volume of goods, information about goods placed in a container body, space information in a container body, and value changes of inventory storage situation.

In a possible design, the warehouse sorting task information further includes goods recorded information of the target container and/or the sorted-out container, to cause the robot to start an alternative operation in a case of detecting that goods actual information of the target container and/or the sorted-out container does not match the goods recorded information.

In a possible design, the target container is a goods container randomly selected by the server or the user.

In a possible design, the randomly selected goods container is an empty container or a goods container in which goods are placed.

In a possible design, the determining module 902 is further configured to: determine other information required for the warehouse sorting task information according to the randomly selected goods container, to construct the warehouse sorting task information.

The apparatus provided in this embodiment may be configured to perform the technical solutions of the server-based method embodiments. Implementation principles and technical effects thereof are similar, and details are not described herein again.

FIG. 10 is a schematic structural diagram of another warehouse sorting apparatus according to an embodiment of the present disclosure. The warehouse sorting apparatus shown in FIG. 10 may be applicable to a robot, such as the robot 40 in FIG. 1. As shown in FIG. 10, the apparatus may include:
an obtaining module 1001, configured to obtain warehouse sorting task information determined by a server according to a type of a warehouse sorting requirement, the warehouse sorting task information including information about to-be-sorted goods, information about a sorted-out container in which the goods are currently located, and information about a corresponding target container; and
a processing module 1002, configured to move the to-be-sorted goods from the sorted-out container to the corresponding target container according to the warehouse sorting task information.

In a possible design, the type of the warehouse sorting requirement includes storage density improvement and/or outbound efficiency improvement.

In a possible design, the processing module 1002 is specifically configured to:
carry, according to the warehouse sorting task information, a sorted-out container loading the to-be-sorted goods to move, to sort the to-be-sorted goods in the sorted-out container to at least one target container; and/or,
carry a target container to move, to take out the to-be-sorted goods from at least one sorted-out container and sort the to-be-sorted goods to the target container.

In a possible design, the carried sorted-out container is a goods container that is estimated to be cleared after the warehouse sorting task information is completed.

In a possible design, the processing module 1002 is further configured to:
in a case that the sorted-out container is cleared, carry the sorted-out container to a region configured to place empty containers or use the sorted-out container as a target container for warehouse sorting; and/or after the to-be-sorted goods are moved from the sorted-out container to a corresponding target container, carry the target container to a storage region.

In a possible design, the warehouse sorting task information further includes space recorded information of the target container and/or the sorted-out container, and the processing module 1002 is further configured to:
start an alternative operation in a case of detecting that space actual information of the target container and/or the sorted-out container does not match the space recorded information.

In a possible design, the space recorded information includes at least one of the following: size information of goods in the container, information about space occupied by goods in the container, information about remaining space in the container, or information about available space in the container.

In a possible design, the processing module 1002 is further configured to:
photograph internal space of the target container and/or the sorted-out container through a visual sensor, and determine the space actual information by analyzing a photographed image.

In a possible design, when determining the space actual information by analyzing a photographed image, the processing module 1002 is specifically configured to:
determine the space actual information according to multi-dimensional information and/or depth information corresponding to the photographed image.

In a possible design, the processing module 1002 is further configured to:
perceive internal space of the target container and/or the sorted-out container through a distance sensor, and determine the space actual information by analyzing a perception result.

In a possible design, the distance sensor includes at least one of the following: an infrared sensor, a laser sensor, or a sound wave sensor.

In a possible design, the starting an alternative operation includes at least one of the following: reporting mismatching information to the server, adjusting positions of goods in the target container through a mechanical arm, or issuing warning information.

In a possible design, the warehouse sorting task information further includes goods recorded information of the target container and/or the sorted-out container, and the processing module 1002 is further configured to:
start an alternative operation in a case of detecting that goods actual information of the target container and/or the sorted-out container does not match the goods recorded information.

In a possible design, the processing module 1002 is further configured to:
determine the goods actual information of the target container and/or the sorted-out container according to at least one of a one-dimensional code, a two-dimensional code, or a radio frequency tag.

The apparatus provided in this embodiment may be configured to perform the technical solutions of the robot-based method embodiments. Implementation principles and technical effects thereof are similar, and details are not described herein again.

FIG. 11 is a schematic structural diagram of a server according to an embodiment of the present disclosure. As shown in FIG. 11, the server in this embodiment may include:
at least one processor 1101; and
a memory 1102 communicatively connected to the at least one processor, where
the memory 1102 stores instructions executable by the at least one processor 1101, and the instructions are executed by the at least one processor 1101, to cause the at least one processor 1101 to perform the server-based method according to any one of the embodiments described above.

Optionally, the memory 1102 may be independent or integrated with the processor 1101.

For implementation principles and technical effects of the server provided in this embodiment, reference may be made to the foregoing embodiments. Details are not described herein again.

FIG. 12 is a schematic structural diagram of a robot according to an embodiment of the present disclosure. As shown in FIG. 12, the robot in this embodiment may include:
at least one processor 1201; and
a memory 1202 communicatively connected to the at least one processor, where
the memory 1202 stores instructions executable by the at least one processor 1201, and the instructions are executed by the at least one processor 1201, to cause the robot to perform the robot-based method according to any one of the embodiments described above.

Optionally, the memory 1202 may be independent or integrated with the processor 1201.

For implementation principles and technical effects of the robot provided in this embodiment, reference may be made to the foregoing embodiments. Details are not described herein again.

An embodiment of the present disclosure further provides a warehouse sorting system, including the server shown in FIG. 11 and the robot shown in FIG. 12. In addition, the warehouse sorting system may further include a put wall and/or a put vehicle to assist in realizing a warehouse sorting function.

For specific operation principles and technical effects of the warehouse sorting system provided in this embodiment, reference may be made to the foregoing embodiments. Details are not described herein again.

An embodiment of the present disclosure further provides a computer-readable storage medium, storing computer-executable instructions, a processor implementing the method according to any one of the foregoing embodiments when executing the computer-executable instructions.

An embodiment of the present disclosure further provides a computer program product including a computer program, the computer program, when executed, implementing the method according to any one of the foregoing embodiments.

In the several embodiments provided in the present disclosure, it should be understood that the disclosed device and method may be implemented in other manners. For example, the described device embodiment is merely an example. For example, the module division is merely logical function division and may be other division in actual implementation. For example, a plurality of modules may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate components may or may not be physically separated, and the components displayed as modules may or may not be physical units, namely, may be located in one place or may be distributed over multiple network units. Some or all of the modules may be selected according to actual requirements to implement the solutions of the embodiments.

In addition, functional modules in the embodiments of the present disclosure may be integrated into one processing unit, or each of the modules may exist alone physically, or two or more modules may be integrated into one unit. The integrated unit may be implemented in a form of hardware, or may be implemented in a form of hardware in addition to a software functional unit.

When the foregoing integrated module is implemented in a form of a software functional module, the integrated unit may be stored in a computer-readable storage medium. The software functional module is stored in a storage medium and includes several instructions for instructing a computer device (which may be a personal computer, a server, or a network device) or a processor to perform some of the steps of the methods described in the embodiments of the present disclosure.

It should be understood that, the processor may be a central processing unit (CPU), or another general-purpose processor, a digital signal processor (DSP), or an application specific integrated circuit (ASIC). The general-purpose processor may be a microprocessor, or the processor may be any conventional processor or the like. Steps of the methods disclosed with reference to the present disclosure may be directly performed and completed by a hardware processor, or may be performed and completed by using a combination of hardware and a software module in the processor.

The memory may include a high-speed RAM, and may further include a non-volatile memory NWM, for example, at least one magnetic disk memory, and may further be a USB flash driver, a mobile hard disc, a read-only memory, a magnetic disk, or an optical disk.

The bus may be an industry standard architecture (ISA) bus, a peripheral component interconnect (PCI) bus, or an extended industry standard architecture (EISA) bus. The bus may be classified into an address bus, a data bus, or a control bus. For ease of indication, the bus in the accompanying drawings of the present disclosure is not limited to only one bus or only one type of bus.

The storage medium may be implemented by any type of volatile or non-volatile storage devices or a combination thereof, such as a static random access memory (SRAM), an electrically erasable programmable read-only memory (EPROM), a programmable read-only memory (PROM), a read-only memory (ROM), a magnetic memory, a flash memory, a magnetic disk, or an optical disk. The storage medium may be any available medium accessible to a general-purpose or dedicated computer.

For example, a storage medium is coupled to a processor, so that the processor can read information from the storage medium or write information into the storage medium. Certainly, the storage medium may be a component of the processor. The processor and the storage medium may be located in an application-specific integrated circuit (ASIC). Certainly, the processor and the storage medium may alternatively exist in an electronic device or a main control device as discrete components.

A person of ordinary skill in the art may understand that all or some of the steps of the method embodiments may be implemented by a program instructing relevant hardware. The program may be stored in a computer-readable storage medium. When the program is executed, steps of the method embodiments are performed. The foregoing storage medium includes: a medium such as a ROM, a RAM, a magnetic disk, or an optical disk that can store program code.

Finally, it should be noted that the foregoing embodiments are merely used for describing the technical solutions of the present disclosure, but are not intended to limit the present disclosure. Although the present disclosure is described in detail with reference to the foregoing embodiments, a person of ordinary skill in the art should understand that, modifications may still be made to the technical solutions in the foregoing embodiments, or equivalent replacements may be made to some or all of the technical features; and these modifications or replacements will not cause the essence of corresponding technical solutions to depart from the scope of the technical solutions in the embodiments of the present disclosure.

## Claims

1. A warehouse sorting method, applicable to a server, and comprising:
obtaining a type of a warehouse sorting requirement;
determining warehouse sorting task information according to the type of the warehouse sorting requirement, the warehouse sorting task information comprising information about to-be-sorted goods, information about a sorted-out container in which the goods are currently located, and information about a corresponding target container, to move the goods from the sorted-out container to the target container; and
outputting the warehouse sorting task information.

2. The method according to claim 1, wherein the type of the warehouse sorting requirement comprises storage density improvement and/or outbound efficiency improvement.

3. The method according to claim 1 or 2, wherein the outputting the warehouse sorting task information comprises:
transmitting the information about the sorted-out container and the information about the target container in the warehouse sorting task information to a robot, to cause the robot to carry the sorted-out container and the target container from a storage region to a preset region according to the warehouse sorting task information; and displaying the information about the sorted-out container, the information about the target container, and the information about the goods in the warehouse sorting task information to a user, to cause the user to move the goods from the sorted-out container to the target container in the preset region.

4. The method according to claim 1 or 2, wherein the outputting the warehouse sorting task information comprises:
transmitting the warehouse sorting task information to a robot, to cause the robot to move the to-be-sorted goods from the corresponding sorted-out container to the target container according to the warehouse sorting task information.

5. The method according to claim 4, wherein the transmitting the warehouse sorting task information to a robot, to cause the robot to move the to-be-sorted goods from the corresponding sorted-out container to the target container according to the warehouse sorting task information comprises:
instructing the robot to carry a sorted-out container loading the to-be-sorted goods to move, to sort the to-be-sorted goods in the sorted-out container to at least one target container; and/or,
instructing the robot to carry a target container to move, to take out the to-be-sorted goods from at least one sorted-out container and sort the to-be-sorted goods to the target container.

6. The method according to claim 5, wherein the sorted-out container carried by the robot is a goods container that is estimated to be cleared after the warehouse sorting task information is completed.

7. The method according to claim 5 or 6, further comprising:
instructing, in a case that the sorted-out container is cleared, the robot to carry the sorted-out container to a region configured to place empty containers or use the sorted-out container as a target container for warehouse sorting; and/or instructing, after the to-be-sorted goods are moved from the sorted-out container to a corresponding target container, the robot to carry the target container to a storage region.

8. The method according to any one of claims 1 to 7, wherein the obtaining a type of a warehouse sorting requirement comprises:
determining the type of the warehouse sorting requirement according to at least one of a goods inventory state, a goods container state, an inbound requirement, and an outbound requirement of the storage region; or
obtaining the type of the warehouse sorting requirement inputted by the user.

9. The method according to any one of claims 1 to 8, wherein the determining warehouse sorting task information according to the type of the warehouse sorting requirement comprises:
generating, in a case that the type of the warehouse sorting requirement is storage density improvement, the warehouse sorting task information according toa storage requirement of goods and/or a current storage state of the goods.

10. The method according to claim 9, wherein the generating the warehouse sorting task information according to a storage requirement of goods and/or a current storage state of the goods comprises:
obtaining a number of savable goods containers through warehouse sorting according to a total number of goods containers currently occupied by goods stored in the storage region and a total number of goods containers estimated to be occupied by the stored goods after warehouse sorting;
calculating an estimated warehouse sorting time required for warehouse sorting; and
generating, in a case that the number of the savable goods containers and the estimated warehouse sorting time meet a preset condition, the warehouse sorting task information according to the storage requirement of the goods and/or the current storage state of the goods.

11. The method according to claim 10, further comprising:
generating warehouse sorting warning information in a case that the number of the savable goods containers and the estimated warehouse sorting time do not meet the preset condition.

12. The method according to claim 9, wherein the generating the warehouse sorting task information according to the storage requirement of goods comprises:
obtaining identity information of the goods and/or attribute information of the goods;
determining corresponding storage requirement according to the identity information of the goods and/or the attribute information of the goods; and
generating the warehouse sorting task information according to the storage requirement, wherein
the attribute information of the goods comprises at least one of the following: a production data, an original attribute, and information about an owner of the goods; and the storage requirement of the goods comprise at least one of the following: independent storage, mixed storage, and sequential storage.

13. The method according to claim 9, wherein the generating the warehouse sorting task information according to the current storage state of the goods comprises:
determining a type of a target container corresponding to the goods according to current storage state of the to-be-sorted goods; and
generating the warehouse sorting task information according to the determined type of the target container.

14. The method according to claim 13, wherein the determining a type of a target container corresponding to the goods according to current storage state of the to-be-sorted goods comprises:
in a case that goods to be placed in a same target container currently only occupy one type of goods containers in the storage region, a goods container of the type is superior to goods containers of other types to be used as the target container of the goods; and/or,
in a case that goods to be placed in a same target container currently occupy a plurality of types of goods containers in the storage region, the type of the target container is selected from the plurality of types of goods containers according to number of goods currently stored by each of the plurality of types of goods containers and/or inbound times of the goods.

15. The method according to claim 9, wherein the generating the warehouse sorting task information according to current storage state of the goods comprises:
for the goods to be placed in a same target container, in a case that the target container is selectable from a plurality of selectable goods containers, the target container is determined according to space occupied by the goods and remaining space of each selectable goods container; and
generating the warehouse sorting task information according to the determined target container.

16. The method according to any one of claims 1 to 15, wherein the determining warehouse sorting task information according to the type of the warehouse sorting requirement comprises:
generating, in a case that the type of the warehouse sorting requirement is outbound efficiency improvement, the warehouse sorting task information according to historical outbound information of goods and/or planned outbound information of goods.

17. The method according to claim 16, wherein the generating the warehouse sorting task information according to historical outbound information of goods and/or planned outbound information of goods comprises:
generating, in a case that a number of times that first goods and second goods appear in a same outbound order meets a preset times requirement and an outbound number of the first goods and the second goods in the same outbound order meets a preset outbound number requirement, the warehouse sorting task information configured to sort at least a part of the first goods and at least a part of the second goods in the storage region to a same target container.

18. The method according to claim 16, wherein the generating the warehouse sorting task information according to planned outbound information of goods comprises:
generating, in a case that an outbound number corresponding to all goods in an outbound order that is not finished is less than an accommodation capacity of a single goods container, the warehouse sorting task information configured to sort all the goods corresponding to the outbound order to a same target container.

19. The method according to claim 16, wherein the generating the warehouse sorting task information according to planned outbound information of goods comprises:
generating, in a case that an outbound number of first goods in an outbound order that is not finished or a plurality of adjacent outbound orders exceeds an accommodation capacity of a single goods container and the first goods are currently distributed in a plurality of goods containers, the warehouse sorting task information configured to sort the first goods in at least two goods containers among the plurality of goods containers to a same target container; and
the plurality of adjacent outbound orders are a plurality of outbound orders in which a difference between outbound times corresponding to any two outbound orders is less than a preset time difference.

20. The method according to any one of claims 1 to 19, wherein the warehouse sorting task information further comprises space recorded information of the target container and/or space recorded information of the sorted-out container, to cause the robot to start an alternative operation in a case of detecting that space actual information of the target container and/or the sorted-out container does not match the space recorded information.

21. The method according to claim 20, wherein the space recorded information comprises at least one of the following: size information of goods in the container, information about space occupied by goods in the container, information about remaining space in the container, and information about available space in the container.

22. The method according to claim 20 or 21, further comprising:
determining space recorded information of each goods container through machine learning according to a volume of goods, information about goods placed in a container body, space information in a container body, and value changes of an inventory storage situation.

23. The method according to any one of claims 1 to 22, wherein the warehouse sorting task information further comprises goods recorded information of the target container and/or the sorted-out container, to cause the robot to start an alternative operation in a case of detecting that goods actual information of the target container and/or the sorted-out container does not match the goods recorded information.

24. The method according to any one of claims 1 to 23, wherein the target container is a goods container randomly selected by the server or the user.

25. The method according to claim 24, wherein the randomly selected goods container is an empty container or a goods container in which goods are placed.

26. The method according to claim 24 or 25, further comprising: determining other information required for the warehouse sorting task information according to the randomly selected goods container, to construct the warehouse sorting task information.

27. A warehouse sorting method, applicable to a robot, and comprising:
obtaining warehouse sorting task information determined by a server according to a type of a warehouse sorting requirement, the warehouse sorting task information comprising information about to-be-sorted goods, information about a sorted-out container in which the goods are currently located, and information about a corresponding target container; and
moving the to-be-sorted goods from the sorted-out container to the corresponding target container according to the warehouse sorting task information.

28. The method according to claim 27, wherein the type of the warehouse sorting requirement comprises storage density improvement and/or outbound efficiency improvement.

29. The method according to claim 27 or 28, wherein the moving the to-be-sorted goods from the sorted-out container to the corresponding target container comprises :
carrying a sorted-out container loading the to-be-sorted goods to move, to sort the to-be-sorted goods in the sorted-out container to at least one target container; and/or,
carrying a target container to move, to take out the to-be-sorted goods from at least one sorted-out container and sort the to-be-sorted goods to the target container.

30. The method according to claim 29, wherein the carried sorted-out container is a goods container that is estimated to be cleared after the warehouse sorting task information is completed.

31. The method according to claim 29 or 30, further comprising:
in a case that the sorted-out container is cleared, carrying the sorted-out container to a region configured to place empty containers or using the sorted-out container as a target container for warehouse sorting; and/or after the to-be-sorted goods are moved from the sorted-out container to a corresponding target container, carrying the target container to a storage region.

32. The method according to any one of claims 27 to 31, wherein the warehouse sorting task information further comprises space recorded information of the target container and/or the sorted-out container, and the method further comprises:
starting an alternative operation in a case of detecting that space actual information of the target container and/or the sorted-out container does not match the space recorded information.

33. The method according to claim 32, wherein the space recorded information comprises at least one of the following: size information of goods in the container, information about space occupied by goods in the container, information about remaining space in the container, and information about available space in the container.

34. The method according to claim 32 or 33, further comprising:
photographing internal space of the target container and/or the sorted-out container through a visual sensor, and determining the space actual information by analyzing a photographed image.

35. The method according to claim 34, wherein the determining the space actual information by analyzing a photographed image comprises:
determining the space actual information according to multi-dimensional information and/or depth information corresponding to the photographed image.

36. The method according to claim 32 or 33, further comprising:
perceiving internal space of the target container and/or the sorted-out container through a distance sensor, and determining the space actual information by analyzing a perception result.

37. The method according to claim 36, wherein the distance sensor comprises at least one of the following: an infrared sensor, a laser sensor, and a sound wave sensor.

38. The method according to any one of claims 32 to 37, wherein the starting an alternative operation comprises at least one of the following:
reporting mismatching information to the server, adjusting positions of goods in the target container through a mechanical arm, and issuing warning information.

39. The method according to any one of claims 27 to 38, wherein the warehouse sorting task information further comprises goods recorded information of the target container and/or the sorted-out container, and the method further comprises:
starting an alternative operation in a case of detecting that goods actual information of the target container and/or the sorted-out container does not match the goods recorded information.

40. The method according to claim 39, further comprising:
determining the goods actual information of the target container and/or the sorted-out container according to at least one of a one-dimensional code, a two-dimensional code, and a radio frequency tag.

41. A warehouse sorting apparatus, applicable to a server, the apparatus comprising:
an obtaining module, configured to obtain a type of a warehouse sorting requirement;
a determining module, configured to determine warehouse sorting task information according to the type of the warehouse sorting requirement, the warehouse sorting task information comprising information about to-be-sorted goods, information about a sorted-out container in which the goods are currently located, and information about a corresponding target container, to move the goods from the sorted-out container to the target container; and
an output module, configured to output the warehouse sorting task information.

42. A warehouse sorting apparatus, applicable to a robot, the apparatus comprising:
an obtaining module, configured to obtain warehouse sorting task information determined by a server according to a type of a warehouse sorting requirement, the warehouse sorting task information comprising information about to-be-sorted goods, information about a sorted-out container in which the goods are currently located, and information about a corresponding target container; and
a processing module, configured to move the to-be-sorted goods from the sorted-out container to the corresponding target container according to the warehouse sorting task information.

43. A server, comprising:
at least one processor, and
a memory communicatively connected to the at least one processor,
wherein the memory stores instructions executable by the at least one processor, the instructions, when executed by the at least one processor, causes the at least one processor to perform the method according to any one of claims 1 to 26.

44. A robot, comprising:
at least one processor, and
a memory communicatively connected to the at least one processor,
wherein the memory stores instructions executable by the at least one processor, the instructions, when executed by the at least one processor, causes the robot to perform the method according to any one of claims 27 to 40.

45. A warehouse sorting system, comprising the server according to claim 43 and the robot according to claim 44.

46. A computer-readable storage medium storing computer-executable instructions, wherein the computer-executable instructions, when executed by a processor, are configured to implement the method according to any one of claims 1 to 40.

47. A computer program product comprising a computer program, wherein the computer program, when executed, is configured to implement the method according to any one of claims 1 to 40.
